# EUROPÄISCHE PATENTSCHRIFT

(11) **EP 3 614 030 B1**
(45) Veröffentlichungstag und Bekanntmachung des Hinweises auf die Patenterteilung: **14.02.2024**
(21) Anmeldenummer: 19183534.7
(22) Anmeldetag: 01.07.2019
(51) Int. Cl.: F16L 21/06, F16L 33/02, F16L 47/12

(54) **LEITUNGSELEMENT MIT INTEGRIERTEM HALTER FÜR FIXIERUNGSMITTEL**
CONDUIT ELEMENT WITH INTEGRATED HOLDER FOR FIXING MEANS
ÉLÉMENT DE CONDUITE POURVU DE SUPPORT INTÉGRÉ POUR UN MOYEN DE FIXATION

(30) Priorität: 02.08.2018 DE 102018212964
(43) Veröffentlichungstag der Anmeldung: 26.02.2020
(73) Patentinhaber: Siemens Mobility GmbH, 81739 München (DE)
(72) Erfinder: Arras, Burkhard, 47802 Krefeld (DE)
(74) Vertreter: Siemens Patent Attorneys

(56) Entgegenhaltungen:
- EP-A1- 0 284 468
- FR-A1- 2 630 808
- FR-A1- 2 776 747
- JP-B2- 4 842 055
- US-A1- 2006 175 837

## Beschreibung

Die Erfindung betrifft ein Leitungselement, insbesondere für Klimaanlagen, nach dem Oberbegriff von Anspruch 1. Die Erfindung betrifft außerdem eine Verbindungsanordnung umfassend ein solches Leitungselement sowie ein zweites Leitungselement und ein umlaufendes Fixierungsmittel zur Fixierung des zweiten Leitungselements am ersten Leitungselement. Die Erfindung betrifft außerdem ein Verfahren zur Herstellung eines solchen Leitungselements.

Ein solches Leitungselement ist beispielsweise aus der JP 4 842055 B2 oder der EP 0 284 468 A1 bekannt.

Luftführende Leitungssysteme zur Klimatisierung von Schienenfahrzeugen, anderen Fahrzeugen bzw. generell zur Klimatisierung von Räumen setzen sich in der Regel aus mehreren Leitungselementen zusammen. Diese Teilstücke der Leitung müssen dicht miteinander verbunden werden, wozu in der Regel ein zusätzliches Fixierungsmittel erforderlich ist, das eingebracht, positioniert und geschlossen werden muss.

In der Schienenfahrzeugtechnik werden hierzu die zu verbindenden Enden zweier Leitungselemente zusammengeschoben, sodass sich diese Leitungselemente überlappen. Ein Fixierungsmittel (beispielsweise eine Rohrschelle) wird dann im überlappenden Bereich der Leitungselemente positioniert und anschließend zusammengezogen.

Diese Vorgehensweise erfordert:
a) das logistische Vorhandensein des passenden Fixierungsmittels (z. B. eine passende Rohrschelle) am Ort der Endmontage des Klimakanalsystems,
b) das Vorhandensein von Werkzeug zum Schließen des Fixierungsmittels,
c) das schwer kontrollierbare ausreichende Überlappen der Leitungselemente, und
d) das zwingend richtige Positionieren der Schelle an einem Querschnitt, bei dem die zu verbindenden Leitungselemente einander überlappen.

Wird das Fixierungsmittel in einem Querschnitt positioniert, der keine vollständige Überlappung der Leitungselemente aufweist, wird kein Verklemmen und damit kein dichtes Verbinden der Kanalstücke erreicht.

Die Aufgabe besteht darin, das Positionieren und Verbinden von Leitungselementen zu vereinfachen und das Risiko einer fehlerhaften Montage zu reduzieren.

Erfindungsgemäß wird ein Leitungselement zur Verfügung gestellt, umfassend ein erstes Leitungsende, wobei an einer radialen Außenseite des ersten Leitungsendes mindestens ein Halter angeordnet ist, wobei der Halter dazu eingerichtet ist, eine Stirnseite eines zweiten Leitungsendes eines zweiten Leitungselements zumindest teilweise aufzunehmen, wobei der Halter ferner dazu eingerichtet ist, ein um das erste Leitungsende umlaufendes Fixierungsmittel zumindest teilweise aufzunehmen, wobei in Radialrichtung zwischen dem mindestens einen Halter und der radialen Außenseite des ersten Leitungsendes ein Aufnahmeraum angeordnet ist, der dazu eingerichtet ist, das zweite Leitungsende des zweiten Leitungselements zumindest teilweise aufzunehmen, und wobei im Halter ein Führungsraum angeordnet ist, der dazu eingerichtet ist, das Fixierungsmittel zumindest teilweise aufzunehmen und eine axiale Soll-Position zwischen dem ersten Leitungsende und dem Fixierungsmittel zu definieren, wobei ferner der Führungsraum radial außerhalb der Aufnahmeraums und im Wesentlichen an derselben axialen Position wie der Aufnahmeraum angeordnet ist, der Halter einen ersten axial verlaufenden Abschnitt, mit dem er an der radialen Außenseite befestigt ist, eine darauffolgende radial nach Außen verlaufende Stufe, die in einen zweiten axial verlaufenden

Abschnitt übergeht, und eine danach folgende radial nach außen verlaufende Kurve umfasst, die den Führungsraum bildet und in einem Rückhaltemechanismus endet. Dabei ist der Aufnahmeraum der Raum zwischen der radialen Außenseite des ersten Leitungsendes und dem zweiten axial verlaufenden Abschnitt.

Ein derartiger Aufbau des Leitungselements hat den Vorteil, dass das Fixierungsmittel am Leitungselement vormontiert werden kann. Das Fixierungsmittel kann beispielsweise eine Schelle, eine Rohrschelle, eine Schlauchschelle oder ein Kabelbinder sein. Durch die Vormontage wird das Fixierungsmittel automatisch am idealen axialen Abstand zum Ende des Leitungsendes positioniert, wodurch Fehlpositionierungen vermieden werden. Insbesondere bei Fixierungsmitteln mit Schraubverbindungen kann es im Stand der Technik durch das aufgebrachte Drehmoment zu einer ungewollten Schrägstellung oder Verschiebung des Fixierungsmittels gegenüber dem Leitungsende kommen, was durch die erfindungsgemäße Lösung vermieden werden kann.

Gleichzeitig kann ein Verlieren des Fixierungsmittels vor der Montage des ersten Leitungselements und dem Verbinden des ersten Leitungsendes mit einem anderen zweiten Leitungselement vermieden werden. Der mindestens eine Halter kann außerdem eine im Wesentlichen optimale axiale Relativposition des ersten Leitungsendes zum zweiten Leitungsende definieren. Der Monteur kann einfacher feststellen, ob beispielsweise das zweite Leitungsende weit genug auf das erste Leitungsende aufgeschoben worden ist, um einen ausreichend breiten Überlappungsbereich bereitzustellen. In diesem Beispiel ist dann ein Innenradius des zweiten Leitungsendes mindestens so groß wie ein Außenradius des ersten Leitungsendes. Davon abweichend können ein oder beide Leitungsenden eine oder mehrere Dichtlippen aufweisen, die in Radialrichtung auf das andere Leitungsende vorstehen. Damit können Toleranzen ausgeglichen und dennoch eine dichte Verbindung der Leitungselemente erreicht werden.

Unter Axialrichtung bzw. Radialrichtung sind im Rahmen dieser Anmeldung die Längsachse eines im Wesentlichen zylinderförmigen Leitungsendes bzw. die Richtungen senkrecht zu dieser Längsachse zu verstehen. Unter einem im Wesentlichen zylinderförmigem Leitungsende ist im Rahmen dieser Anmeldung ein Leitungsende zu verstehen, dessen Querschnitt entlang der Längsachse dieses Leitungsendes gleichbleibt. Der Querschnitt in diesem im Wesentlichen zylinderförmigem Leitungsende kann durch eine geschlossene Umrandungslinie beschrieben werden (z. B. Kreis, Ellipse), die vorzugsweise an jeder Stelle eine gleichsinnige Krümmung oder gerade Abschnitte aufweist. Grundsätzlich ist unter einem im Wesentlichen zylinderförmigem Leitungsende also eine konvexe Krümmung der Außenseite des Leitungsendes zu verstehen. Das Leitungselement kann jedoch in einem gewissen Abstand vom ersten Leitungsende einen nicht zylinderförmigen Querschnitt aufweisen bzw. abknicken oder sich verzweigen usw. Im Wesentlichen zylinderförmig ist weiterhin so zu verstehen, dass gewisse Abweichungen von einer idealen Zylinderform aufgrund von Toleranzen unvermeidbar sind und weiterhin durch elastische Verformungen, insbesondere im nicht-montierten Zustand des Leitungselements, Abweichungen möglich sind.

Das Leitungselement kann einen, zwei, drei, vier oder mehr Halter umfassen. Bei zwei oder mehr Haltern sind diese vorzugsweise an der gleichen axialen Position am ersten Leitungsende angeordnet.

Das Leitungselement ist vorzugsweise für ein Kanalsystem einer Klimaanlage vorgesehen und dementsprechend dimensioniert.

Wenn in dieser Anmeldung von einem Leitungselement oder einem ersten Leitungselement die Rede ist, so ist darunter das erfindungsgemäße Leitungselement zu verstehen. Das zweite Leitungselement kann ein Standard-Leitungselement ohne Halter sein oder kann lediglich an seinem zweiten Leitungsende keine Halter aufweisen.

Das Leitungselement kann mit integrierten Haltern mit Hilfe additiver Verfahren hergestellt werden. Die erfindungsgemäße Lösung erreicht eine erhöhte Zuverlässigkeit in der Verbindung der Leitungselemente durch die Kontrollierbarkeit der Überlappung (Halter dient als Anschlag) und die richtige Positionierung der Schelle/Rohrschelle/Schlauchschelle/des Kabelbinders. Der in das Bauteil integrierte Halter für das Fixierungsmittel ermöglicht eine Vormontage, vereinfacht die Logistik (weniger Bauteile), beschleunigt die Endmontage und reduziert die Kosten. Das Fixierungsmittel kann einfach in den oder die Halter hineingedrückt werden und muss nicht eingefädelt werden. Gleichzeitig kann als Fixierungsmittel auch ein einfacher Kabelbinder verwendet werden, der einfacher zu öffnen und schließen ist und geringere Kosten verursacht als die im Stand der Technik üblichen Schellen. Kabelbinder sind in der Regel auch für einen größeren Bereich von Leitungsdurchmessern geeignet als Schellen und damit flexibler im Einsatz.

Vorzugsweise umfasst das Leitungselement mindestens zwei Halter, wobei die Halter einen gleichen Abstand zum in Umfangsrichtung jeweils benachbarten Halter aufweisen. Bei zwei Haltern sind diese also in 180° Abstand (Mitte des einen Halters zur Mitte des anderen Halters) in Umfangsrichtung angeordnet. Bei drei Haltern sind diese in 120° Abstand (Mitte des einen Halters zur Mitte des benachbarten Halters) in Umfangsrichtung angeordnet usw. Damit lassen sich eine möglichst effektive Vorpositionierung des Fixierungsmittels und eine möglichst genaue gewünschte axiale Relativposition für die beiden Leitungsenden definieren.

Es ist vorgesehen, dass in Radialrichtung zwischen dem mindestens einen Halter und der radialen Außenseite des ersten Leitungsendes ein Aufnahmeraum angeordnet ist, der dazu eingerichtet ist, das zweite Leitungsende des zweiten Leitungselements zumindest teilweise aufzunehmen. Das zweite Leitungsende kann dann radial innen an dem ersten Leitungsende und radial außen am Halter anliegen.

In einer bevorzugten Ausführungsform ist an einem axialen Ende des Aufnahmeraums ein Anschlag für die Stirnseite des zweiten Leitungsendes des zweiten Leitungselements angeordnet, der eine axiale Soll-Position zwischen dem zweiten Leitungselement und dem ersten Leitungselement definiert. Damit kann durch den Monteur einfach und effektiv sichergestellt werden, dass das erste Leitungsende und das zweite Leitungsende weit genug aufeinander aufgeschoben sind. Der Monteur spürt dann beim Zusammenschieben der Leitungsenden einen abrupten, mechanischen Widerstand, der anzeigt, dass die Soll-Position erreicht ist. Somit wird sichergestellt, dass eine ausreichende Überlappung zwischen den Leitungsenden erreicht ist.

Im Halter ist ein Führungsraum angeordnet, der dazu eingerichtet ist, das Fixierungsmittel zumindest teilweise aufzunehmen und eine axiale Soll-Position zwischen dem ersten Leitungsende und dem Fixierungsmittel zu definieren. Der Führungsraum ist radial außerhalb des Aufnahmeraums und im Wesentlichen an derselben axialen Position wie der Aufnahmeraum angeordnet. Somit kann das Fixierungsmittel die beiden Leitungsenden möglichst effektiv aneinander fixieren und eine möglichst optimale relative Anordnung der drei Teile ist sichergestellt.

Vorzugsweise weist der Halter an einem in Axialrichtung offenen Ende des Führungsraums einen Rückhaltemechanismus für ein in den Führungsraum eingeführtes Fixierungsmittel auf. Der Rückhaltemechanismus stellt sicher, dass ein einmal eingebrachtes Fixierungsmittel nicht ohne Weiteres den Führungsraum verlassen kann und somit wird ein Verlieren eines vormontierten Fixierungsmittels vermieden. Der Rückhaltemechanismus kann beispielsweise ein elastischer Klips-Mechanismus sein, der ein verengtes offenes Ende des Führungsraums in Axialrichtung bildet. Dies vereinfacht auch das Einbringen des Fixierungsmittels bei einer Vormontage.

Die erfindungsgemäße Aufgabe wird außerdem durch eine Verbindungsanordnung gelöst, die ein Leitungselement nach einem der vorstehenden Ausführungsformen sowie ein zweites Leitungselement und ein umlaufendes Fixierungsmittel zur Fixierung des zweiten Leitungselements am ersten Leitungselement umfasst.

Vorzugsweise ist das Fixierungsmittel eine Schelle, eine Rohrschelle, eine Schlauchschelle oder ein Kabelbinder. Statt einer Schelle, einer Rohrschelle oder einer Schlauchschelle reicht erfindungsgemäß auch ein Kabelbinder aus. Dies wird dadurch erreicht, dass der mindestens eine Halter selbst eine gute Positionierung sicherstellt, die im Stand der Technik durch einen Kabelbinder schwierig zu erreichen wäre. Der Kabelbinder kann aus Kunststoff und/oder Metall bestehen. Ein Kabelbinder hat den weiteren Vorteil, dass er mit einer Standardzange sehr schnell zugezogen werden kann und mittels Seitenschneider auch wieder gelöst werden kann, sollte das erforderlich sein.

Die erfindungsgemäße Aufgabe wird außerdem durch ein Verfahren zur Herstellung eines Leitungselements nach einer der vorstehenden Ausführungsformen gelöst, wobei der mindestens eine Halter auf das erste Leitungsende durch ein additives Herstellungsverfahren aufgetragen wird, wodurch das erste Leitungselement erhalten wird. Es kann beispielsweise ein Standard-Leitungselement als Grundlage verwendet werden, auf dem der/die Halter durch ein additives Verfahren aufgetragen wird/werden. Dies ermöglicht es, für jedes Standard-Leitungselement Halter hinzuzufügen, um ein erfindungsgemäßes Leitungselement zu erhalten.

Vorzugsweise wird das Leitungselement mit mindestens einem integrierten Halter durch ein additives Herstellungsverfahren hergestellt. Das Leitungselement kann also auch in einem Stück gemeinsam mit dem/den Halter(n) durch ein additives Herstellungsverfahren, wie beispielsweise 3D-Druck, hergestellt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine Schnittansicht eines ersten Leitungsendes mit einem Halter;
- Figur 2: eine Schnittansicht eines ersten und eines zweiten Leitungsendes, mit einem Halter und einem Fixierungsmittel;
- Figur 3: eine Außenansicht eines nicht erfindungsgemäßen Leitungsendes, mit einem Halter und einem vormontierten Fixierungsmittel; und
- Figur 4: eine Außenansicht eines nicht erfindungsgemäßen Leitungsendes, mit
einem Halter und einem Fixierungsmittel.

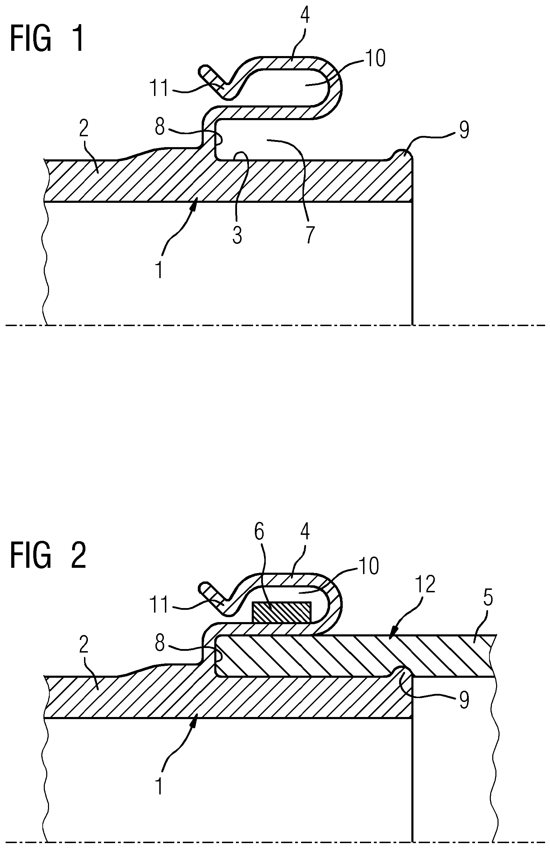

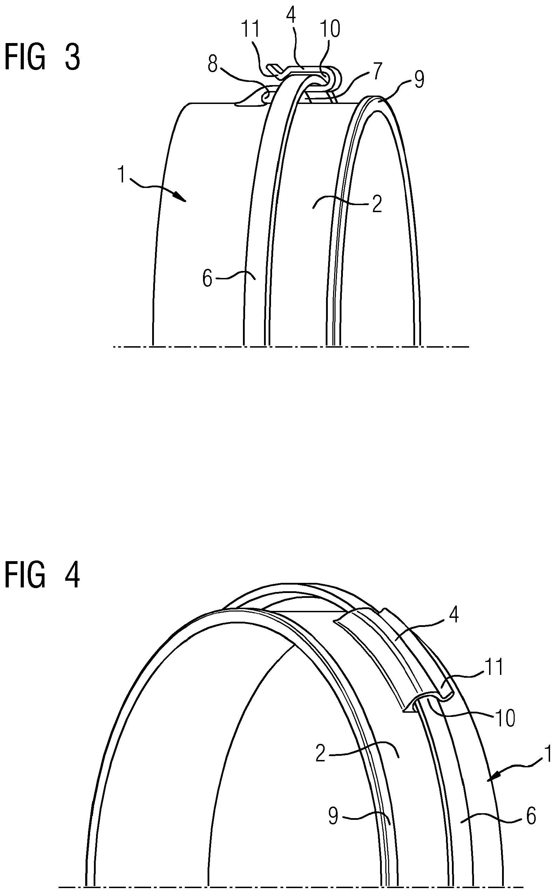

Figur 2 zeigt eine Schnittansicht durch einen Verbindungsbereich einer erfindungsgemäßen Verbindungsanordnung im montierten Zustand, während Figur 1 und 3 nur einen Teil eines erfindungsgemäßen Leitungselements 1 allein zeigt.

Figur 1 zeigt das Leitungselement 1 und insbesondere ein erstes Leitungsende 2 des Leitungselements 1. An einer radialen Außenseite 3 des ersten Leitungsendes 2 ist mindestens ein Halter 4 angeordnet. Der Halter 4 ist dazu eingerichtet, eine Stirnseite eines zweiten Leitungsendes 5 (siehe Figur 2) eines zweiten Leitungselements 12 zumindest teilweise aufzunehmen. Der Halter 4 ist dazu eingerichtet, ein um das erste Leitungsende 2 umlaufendes Fixierungsmittel 6 (siehe Figur 2) zumindest teilweise aufzunehmen.

Das Fixierungsmittel 6 kann beispielsweise eine Schelle, eine Rohrschelle, eine Schlauchschelle oder ein Kabelbinder sein. Durch die Vormontage wird das Fixierungsmittel 6 automatisch am idealen axialen Abstand zur offenen Stirnseite des ersten Leitungsendes 2 positioniert, wodurch Fehlpositionierungen vermieden werden.

In der Ausführungsform der Figuren 1 bis 2 ist nur ein Halter 4 gezeigt. Das Leitungselement kann einen, zwei, drei, vier oder mehr Halter 4 umfassen. Bei zwei oder mehr Haltern 4 sind diese vorzugsweise an der gleichen axialen Position am ersten Leitungsende 2 angeordnet. Bei mehr als einem Halter 4 können die Halter 4 einen gleichen Abstand zum in Umfangsrichtung jeweils benachbarten Halter 4 aufweisen.

In Radialrichtung zwischen dem mindestens einen Halter 4 und der radialen Außenseite 3 des ersten Leitungsendes 2 ist ein Aufnahmeraum 7 angeordnet. Der Aufnahmeraum 7 ist dazu eingerichtet, das zweite Leitungsende 5 des zweiten Leitungselements 12 zumindest teilweise aufzunehmen. Das zweite Leitungsende 5 kann dann radial innen an dem ersten Leitungsende 2 (insbesondere an der radialen Außenseite 3) und radial außen am Halter 4 anliegen.

An einem axialen Ende des Aufnahmeraums 7 ist ein Anschlag 8 für die Stirnseite des zweiten Leitungsendes 5 des zweiten Leitungselements 12 angeordnet. Der Anschlag 8 definiert eine axiale Soll-Position zwischen dem zweiten Leitungselement 12 und dem ersten Leitungselement 2. Damit kann durch den Monteur einfach und effektiv sichergestellt werden, dass das erste Leitungsende 2 und das zweite Leitungsende 5 weit genug aufeinander aufgeschoben sind.

Das erste Leitungsende umfasst außerdem eine Dichtlippe 9, die eine möglichst dichte Verbindung der Leitungsenden 2; 5 sicherstellt.

Im Halter 4 ist außerdem ein Führungsraum 10 angeordnet. Der Führungsraum 10 ist dazu eingerichtet, das Fixierungsmittel 6 zumindest teilweise aufzunehmen und eine axiale Soll-Position zwischen dem ersten Leitungsende 2 und dem Fixierungsmittel 6 zu definieren. Der Führungsraum 10 ist radial außerhalb der Aufnahmeraums 7 und im Wesentlichen an derselben axialen Position wie der Aufnahmeraum 7 angeordnet. Dadurch kann das Fixierungsmittel 6 die beiden Leitungsenden 2; 5 möglichst effektiv aneinander fixieren, und eine möglichst optimale relative Anordnung der drei Teile ist sichergestellt.

Der Halter 4 weist an einem in Axialrichtung offenen Ende des Führungsraums 10 einen Rückhaltemechanismus 11 für das in den Führungsraum 10 eingeführte Fixierungsmittel 6 auf. Der Rückhaltemechanismus 11 stellt sicher, dass ein einmal eingebrachtes Fixierungsmittel 6 nicht ohne Weiteres den Führungsraum 10 verlassen kann. Somit wird ein Verlieren eines vormontierten Fixierungsmittels 6 vermieden. Der Rückhaltemechanismus 11 ist hier ein elastischer Klips-Mechanismus, der ein verengtes und offenes Ende des Führungsraums 11 in Axialrichtung bildet. Dies vereinfacht auch das Einbringen, bzw. Einklipsen, des Fixierungsmittels 6 bei einer Vormontage.

Vorzugsweise ist das Fixierungsmittel 6 eine Schelle, eine Rohrschelle, eine Schlauchschelle oder ein Kabelbinder. Statt einer Schelle, einer Rohrschelle oder einer Schlauchschelle reicht erfindungsgemäß auch ein Kabelbinder aus. Dies wird dadurch erreicht, dass der mindestens eine Halter 4 selbst eine gute Positionierung sicherstellt, die im Stand der Technik durch einen Kabelbinder schwierig zu erreichen wäre.

Figuren 3 und 4 zeigen jeweils eine obere Hälfte eines nicht erfindungsgemäßen Leitungselements 1 in Außenansichten aus zwei verschiedenen Winkeln. Wie ersichtlich ist, nimmt der Halter 4 nur einen Bruchteil des radialen Umfangs des ersten Leitungsendes 2 ein. Dadurch wird Material gespart und das Leitungsende 2 wird nicht unnötig versteift, was die Verbindung mit dem zweiten Leitungsende 5 erschweren könnte.

Mit Verweis auf Figur 1 umfasst der Halter 4 in dieser Ausführungsform einen ersten axial verlaufenden Abschnitt, mit dem er an der radialen Außenseite 3 befestigt ist. Darauf folgt eine Stufe radial nach Außen, die in einen zweiten axial verlaufenden Abschnitt übergeht. Danach folgt eine radial nach außen verlaufende Kurve, die den Führungsraum 10 bildet und im Rückhaltemechanismus 11 endet.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitungselement (1) umfassend ein erstes Leitungsende (2), wobei an einer radialen Außenseite (3) des ersten Leitungsendes (2) mindestens ein Halter (4) angeordnet ist,
wobei der Halter (4) dazu eingerichtet ist, eine Stirnseite eines zweiten Leitungsendes (5) eines zweiten Leitungselements (12) zumindest teilweise aufzunehmen,
wobei der Halter (4) ferner dazu eingerichtet ist, ein um das erste Leitungsende (2) umlaufendes Fixierungsmittel (6) zumindest teilweise aufzunehmen,
wobei in Radialrichtung zwischen dem mindestens einen Halter (4) und der radialen Außenseite (3) des ersten Leitungsendes (2) ein Aufnahmeraum (7) angeordnet ist, der dazu eingerichtet ist, das zweite Leitungsende (5) des zweiten Leitungselements (12) zumindest teilweise aufzunehmen, und
wobei im Halter (4) ein Führungsraum (10) angeordnet ist, der dazu eingerichtet ist, das Fixierungsmittel (6) zumindest teilweise aufzunehmen und eine axiale Soll-Position zwischen dem ersten Leitungsende (2) und dem Fixierungsmittel (6) zu definieren,
wobei der Halter (4) einen ersten axial verlaufenden Abschnitt, mit dem er an der radialen Außenseite (3) befestigt ist, eine darauffolgende radial nach Außen verlaufende Stufe, die in einen zweiten axial verlaufenden Abschnitt übergeht, und eine danach folgende radial nach außen verlaufende Kurve umfasst, die den Führungsraum (10) bildet und in einem Rückhaltemechanismus (11) endet,
**dadurch gekennzeichnet, dass**
der Aufnahmeraum (7) der Raum zwischen der radialen Außenseite (3) des ersten Leitungsendes (2) und dem zweiten axial verlaufenden Abschnitt ist, wobei der Führungsraum (10) radial außerhalb des Aufnahmeraums (7) und im Wesentlichen an derselben axialen Position wie der Aufnahmeraum (7) angeordnet ist.

2. Leitungselement (1) nach Anspruch 1, umfassend mindestens zwei Halter (4),
wobei die Halter (4) einen gleichen Abstand zum in Umfangsrichtung jeweils benachbarten Halter (4) aufweisen.

3. Leitungselement (1) nach einem der Ansprüche 1 oder 2,
wobei an einem axialen Ende des Aufnahmeraums (7) ein Anschlag (8) für die Stirnseite des zweiten Leitungsendes (5) des zweiten Leitungselements (12) angeordnet ist, der eine axiale Soll-Position zwischen dem zweiten Leitungselement (12) und dem ersten Leitungselement (1) definiert.

4. Leitungselement (1) nach einem der Ansprüche 1 bis 3,
wobei der Halter (4) an einem in Axialrichtung offenen Ende des Führungsraums (10) den Rückhaltemechanismus (11) für ein in den Führungsraum (10) eingeführtes Fixierungsmittel (6) aufweist.

5. Verbindungsanordnung umfassend ein Leitungselement (1) nach einem der vorstehenden Ansprüche sowie ein zweites Leitungselement (12) und ein umlaufendes Fixierungsmittel (6) zur Fixierung des zweiten Leitungselements (12) am ersten Leitungselement (1).

6. Verbindungsanordnung nach Anspruch 5, wobei das Fixierungsmittel (6) eine Schelle, eine Rohrschelle, eine Schlauchschelle oder ein Kabelbinder ist.

7. Verfahren zur Herstellung eines Leitungselements (1) nach einem der Ansprüche 1 bis 3, wobei der mindestens eine Halter (4) auf das erste Leitungsende (2) durch ein additives Herstellungsverfahren aufgetragen wird, wodurch das erste Leitungselement (1) erhalten wird.

8. Verfahren nach Anspruch 7, wobei das Leitungselement (1) mit mindestens einem integrierten Halter (4) durch ein additives Herstellungsverfahren hergestellt wird.

## Claims

1. Conduit element (1) comprising a first conduit end (2), wherein at least one holder (4) is arranged on a radial outer side (3) of the first conduit end (2),
wherein the holder (4) is intended at least partially to receive an end side of a second conduit end (5) of a second conduit element (12),
wherein the holder (4) is also intended at least partially to receive a fixing means (6), which encircles the first conduit end (2),
wherein a receiving space (7) is arranged in the radial direction between the at least one holder (4) and the radial outer side (3) of the first conduit end (2), the receiving space being intended at least partially to receive the second conduit end (5) of the second conduit element (12), and
wherein a guide space (10) is arranged in the holder (4) and is intended at least partially to receive the fixing means (6) and to define a desired axial position between the first conduit end (2) and the fixing means (6),
wherein the holder (4) comprises a first axially running portion, by way of which it is fastened on the radial outer side (3), also comprises a subsequent, radially outwardly running step, which merges into a second axially running portion, and further comprises a following, radially outwardly running curve, which forms the guide space (10) and terminates in a restraining mechanism (11),
**characterized in that**
the receiving space (7) is the space between the radial outer side (3) of the first conduit end (2) and the second axially running portion, wherein the guide space (10) is arranged radially outside the receiving space (7) and essentially in the same axial position as the receiving space (7).

2. Conduit element (1) according to Claim 1, comprising at least two holders (4),
wherein the holders (4) are each at an equal distance from the circumferentially respectively adjacent holder (4).

3. Conduit element (1) according to either of Claims 1 and 2, wherein a stop (8) for the end side of the second conduit end (5) of the second conduit element (12) is arranged at an axial end of the receiving space (7), the stop defining a desired axial position between the second conduit element (12) and the first conduit element (1).

4. Conduit element (1) according to one of Claims 1 to 3, wherein, at an axially open end of the guide space (10), the holder (4) has the restraining mechanism (11) for a fixing means (6), which is introduced into the guide space (10).

5. Connecting arrangement comprising a conduit element (1) according to one of the preceding claims and also comprising a second conduit element (12) and an encircling fixing means (6) for fixing the second conduit element (12) on the first conduit element (1).

6. Connecting arrangement according to Claim 5, wherein the fixing means (6) is a clamp, a pipe clamp, a hose clamp or a cable tie.

7. Method for producing a conduit element (1) according to one of Claims 1 to 3, wherein the at least one holder (4) is attached to the first conduit end (2) by an additive manufacturing process, the first conduit element (1) being obtained as a result.

8. Method according to Claim 7, wherein the conduit element (1) with at least one integrated holder (4) is produced by an additive manufacturing process.

## Revendications

1. Elément (1) de conduite comprenant un premier bout (2) de conduite, dans lequel un support (4) est disposé à un côté (3) extérieur radial du premier bout (2) de conduite,
dans lequel le support (4) est agencé pour recevoir au moins en partie un côté frontal d'un deuxième bout (5) de conduite d'un deuxième élément (12) de conduite,
dans lequel le support (4) est agencé en outre, pour recevoir au moins en partie un moyen (6) de fixation entourant le premier bout (2) de conduite,
dans lequel dans la direction radiale entre le au moins un support (4) et le côté (3) extérieur radial du premier bout (2) de conduite, est disposé un espace (7) de réception, qui est agencé pour recevoir au moins en partie le deuxième bout (5) de conduite du deuxième élément (12) de conduite, et
dans lequel dans le support (4) est disposé un espace (10) de guidage, qui est agencé pour recevoir au moins en partie le moyen (6) de fixation et pour définir une position de consigne axiale entre le premier bout (2) de conduite et le moyen (6) de fixation,
dans lequel le support (4) a une première partie s'étendant axialement, par laquelle il est fixé, au côté (3) extérieur radial, un palier à la suite s'étendant vers l'extérieur radialement, qui se transforme en une deuxième partie s'étendant axialement et une courbe à la suite, s'étendant vers l'extérieur radialement, qui forme l'espace (10) de guidage et qui se termine en un mécanisme (11) de retenue,
**caractérisé en ce que**
l'espace (7) de réception est l'espace compris entre le côté (3) extérieur radial du premier bout (2) de conduite et la deuxième partie s'étendant axialement, dans lequel l'espace (10) de guidage est disposé à l'extérieur radialement de l'espace (7) de réception et sensiblement en la même position axiale que l'espace (7) de réception.

2. Elément (1) de conduite suivant la revendication 1, comprenant au moins deux supports (4),
dans lequel les supports (4) ont une même distance au support (4) voisin respectivement dans la direction du pourtour.

3. Elément (1) de conduite suivant l'une des revendications 1 ou 2,
dans lequel à une extrémité axiale de l'espace (7) de réception est disposée une butée (8) pour le côté frontal du deuxième bout (5) de conduite du deuxième élément (12) de conduite, qui définit une position de consigne axiale entre le deuxième élément (12) de conduite et le premier élément (1) de conduite.

4. Elément (1) de conduite suivant l'une des revendications 1 à 3,
dans lequel le support (4) a, une extrémité ouverte dans la direction axiale de l'espace (10) de conduite, le mécanisme (11) de retenue d'un moyen (6) de fixation inséré dans l'espace (10) de guidage.

5. Agencement de liaison comprenant un élément (1) de conduite suivant l'une des revendications précédentes, ainsi qu'un deuxième élément (12) de conduite et un moyen (6) de fixation faisant le tour pour la fixation du deuxième élément (12) de conduite au premier élément (1) de conduite.

6. Agencement de liaison suivant la revendication 5, dans lequel le moyen (6) de fixation est une bride, un étrier, collier de serrage ou un serrage par câble.

7. Procédé de fabrication d'un élément (1) de conduite suivant l'une des revendications 1 à 3, dans lequel on dépose le au moins un support (4) sur le premier bout (2) de conduite par un procédé de fabrication additive, en obtenant ainsi le premier élément (1) de conduite.

8. Procédé suivant la revendication 7, dans lequel on fabrique l'élément (1) de conduite avec, au moins, un support (4) intégré par un procédé de fabrication additive.
